# EUROPEAN PATENT APPLICATION

(11) **EP 4 835 972 A1**
(43) Date of publication of application: **04.11.2026**
(21) Application number: 24912756.4
(22) Date of filing: 23.12.2024
(51) Int. Cl.: H01M 4/13, H01M 4/36, H01M 4/38, H01M 4/58, H01M 4/62

(54) **POSITIVE ELECTRODE MIXTURE**

(30) Priority: 27.12.2023 JP 2023220597
(71) Applicant: Idemitsu Kosan Co.,Ltd., Tokyo 100-8321 (JP)
(72) Inventor: HANIU, Yamato, Tokyo 100-8321 (JP); TANAKA, Takashi, Tokyo 100-8321 (JP)
(74) Representative: Vossius & Partner Patentanwälte Rechtsanwälte mbB
(86) International application number: PCT/JP2024/045536
(87) International publication number: WO 2025/142869

(57) **Abstract**

A positive electrode mixture containing: a sulfur-based active material; a porous carbon material; at least one of an elemental-phosphorus-containing ion conductor and a variant of said ion conductor; and a solid electrolyte, wherein at least one of formulas (1) and (2) is satisfied in the P2p spectrum of a surface elemental analysis by X-ray photoelectron spectroscopy. Formula (1): I_{A}/I_{B}>0.50, formula (2): I_{C}/I_{B}>1.20 (In the formulas, I_{A} is the signal strength at a position A where the binding energy is around 135.4 eV, I_{B} is the signal strength at a position B where the binding energy is around 134.25 eV, and I_{C} is the signal strength at a position C where the binding energy is around 133.0 eV.)

## Description

### Technical Field

The present invention relates to a positive electrode mixture and a method of producing the positive electrode mixture.

### Background Art

A high battery capacity is required in a lithium ion battery. To improve the battery capacity, a method including using sulfur for a positive electrode has been investigated because sulfur has a large theoretical capacity. However, when sulfur is used for the positive electrode, lithium ion conductivity and electron conductivity in the positive electrode need to be secured because sulfur has low lithium ion conductivity and low electron conductivity.

To solve the above-mentioned problem, a positive electrode mixture in which sulfur, a carbon material, phosphorus pentasulfide, a solid electrolyte, and the like are formed into a composite by mechanical milling with a planetary ball mill has been investigated (see, for example, Patent Literatures 1 and 2). In addition, a positive electrode mixture containing sulfur, a carbon material having pores, a solid electrolyte, and the like in which the solid electrolyte is arranged in pores of the carbon material from a solution state has been investigated (see, for example, Patent Literatures 3 and 4).

### Citation List

### Patent Literature

[PTL 1] JP 7156157 B2
[PTL 2] JP 6061139 B2
[PTL 3] JP 7283657 B2
[PTL 4] WO 2023/187466 A1

### Summary of Invention

It is required to further improve the charge-discharge characteristics of a lithium ion battery as compared to those of the related art. In such normal mixing by mechanical milling as disclosed in each of Patent Literatures 1 and 2, the formation of an interface between sulfur and a carbon material, and a solid electrolyte, phosphorus pentasulfide, or the like in a composite to be obtained is insufficient, and hence there has been a limitation on the formation of an ion conduction path to sulfur and the carbon material. In such method of precipitating a solid electrolyte from a solution as disclosed in each of Patent Literatures 3 and 4, the formation of an interface between sulfur and a carbon material, and the solid electrolyte in a composite to be obtained is insufficient, and hence there has been a limitation on the formation of an ion conduction path to sulfur and the carbon material.

An object of the present invention is to provide a positive electrode mixture capable of improving the charge-discharge characteristics of a lithium ion battery.

According to the present invention, there are provided the following positive electrode mixture and the like.
1. A positive electrode mixture including a sulfur-based active material; a carbon material having pores; at least one of an ion conductor containing a phosphorus element and a modified product of the ion conductor; and a solid electrolyte,
   wherein in a P2p spectrum in surface elemental analysis thereof by X-ray photoelectron spectroscopy, at least one of the following formulas (1) and (2) is satisfied: ${I}_{A} / {I}_{B} > 0.50$ (1) ${I}_{C} / {I}_{B} > 1.20$ (2) wherein I_{A} represents a signal intensity at a position A where a binding energy is around 135.4 eV, I_{B} represents a signal intensity at a position B where the binding energy is around 134.25 eV, and I_{C} represents a signal intensity at a position C where the binding energy is around 133.0 eV.
2. The positive electrode mixture according to Item 1, wherein the ratio I_{C}/I_{B} is larger than 1.3.
3. The positive electrode mixture according to Item 1 or 2, wherein a rate of change in elemental ratio C/P of a carbon element to a phosphorus element by the surface elemental analysis by the X-ray photoelectron spectroscopy before and after Ar sputtering treatment is 0.550 or more.
4. The positive electrode mixture according to Item 3, wherein the rate of change in elemental ratio C/P is 0.600 or more.
5. The positive electrode mixture according to any one of Items 1 to 4, wherein in solid-state ³¹P-NMR measurement thereof, a total of areas of a peak of P₂S₆⁴⁻ and a peak of PS₃⁻ is 20% or more of an entirety.
6. The positive electrode mixture according to any one of Items 1 to 5, wherein in solid-state ³¹P-NMR measurement thereof, an area of a peak of P₂S₅ is 25% or less of an entirety.
7. The positive electrode mixture according to any one of Items 1 to 6, wherein the ion conductor has a melting point of from 130°C to 450°C.
8. The positive electrode mixture according to any one of Items 1 to 7, wherein the ion conductor includes a lithium ion conductive material containing a phosphorus element, and one or more kinds of elements selected from lithium, boron, sulfur, and oxygen, or a precursor thereof.
9. The positive electrode mixture according to any one of Items 1 to 8, wherein the ion conductor includes phosphorus sulfide.
10. The positive electrode mixture according to any one of Items 1 to 9, wherein the ion conductor includes phosphorus pentasulfide.
11. The positive electrode mixture according to any one of Items 1 to 10, wherein the sulfur-based active material includes elemental sulfur.
12. The positive electrode mixture according to any one of Items 1 to 11, wherein a mass ratio of a total of the sulfur-based active material, and the ion conductor containing a phosphorus element and the modified product of the ion conductor is smaller than 5.00 to the carbon material.
13. A method of producing a positive electrode mixture including: mixing at least one of a composite or a mixture of a sulfur-based active material and a carbon material having pores with an ion conductor in a molten state to prepare a positive electrode mixture precursor; and
   mixing and pulverizing the positive electrode mixture precursor and a crystalline solid electrolyte under a condition where crystallinity of the solid electrolyte is free from disappearing, to thereby produce a positive electrode mixture.
14. The method of producing it according to Item 13, wherein the composite of the sulfur-based active material and the carbon material having pores is mixed with the ion conductor in a molten state.
15. The method of producing it according to Item 13 or 14, wherein the ion conductor has a melting point of from 130°C to 450°C.
16. The method of producing it according to any one of Items 13 to 15, wherein the ion conductor includes a lithium ion conductive material containing a phosphorus element, and one or more kinds of elements selected from lithium, boron, sulfur, and oxygen, or a precursor thereof.
17. The method of producing it according to any one of Items 13 to 16, wherein the ion conductor is phosphorus sulfide.
18. The method of producing it according to any one of Items 13 to 17, wherein the ion conductor includes phosphorus pentasulfide.
19. The method of producing it according to any one of Items 13 to 18, wherein the sulfur-based active material includes elemental sulfur.
20. The method of producing it according to any one of Items 13 to 19, wherein a mass ratio among the sulfur-based active material, the carbon material, and the ion conductor satisfies the following relationship:
   (sulfur-based active material+carbon material):ion conductor = 50:1 to 80.
21. The method of producing it according to any one of Items 13 to 20, wherein a mass ratio of a total of the sulfur-based active material and the ion conductor is smaller than 5.00 to the carbon material.
22. A positive electrode including the positive electrode mixture according to any one of Items 1 to 12.
23. A lithium ion battery including the positive electrode mixture according to any one of Items 1 to 12, or the positive electrode according to Item 22.

The present invention can provide the positive electrode mixture capable of improving the charge-discharge characteristics of a lithium ion battery. In addition, the usage amount of a solid electrolyte, which is often produced by a complicated production process, can be reduced, and hence a reduction in cost can be expected.

### Brief Description of Drawings

FIG. 1 is a P2p spectrum of Example 1.
FIG. 2 is a P2p spectrum of Example 2.
FIG. 3 is a P2p spectrum of Example 3.
FIG. 4 is a P2p spectrum of Example 4.
FIG. 5 is a P2p spectrum of Example 5.
FIG. 6 is a P2p spectrum of Example 6.
FIG. 7 is a P2p spectrum of Example 7.
FIG. 8 is an S2p spectrum of Comparative Example 2.
FIG. 9 is a P2p spectrum of Reference Example 1.
FIG. 10 is a P2p spectrum of Reference Example 2.
FIG. 11 is a P2p spectrum of Reference Example 3.
FIG. 12 is a result of the waveform separation of a solid-state ³¹P-NMR spectrum of Example 1.
FIG. 13 is a result of the waveform separation of a solid-state ³¹P-NMR spectrum of Comparative Example 2.
FIG. 14 is an X-ray diffraction (XRD) chart of Example 1.
FIG. 15 is an XRD chart of Example 2.
FIG. 16 is an XRD chart of Example 3.
FIG. 17 is an XRD chart of Example 4.
FIG. 18 is an XRD chart of Comparative Example 2.
FIG. 19 is an XRD chart of Comparative Example 3.

### Description of Embodiments

### 1. First Embodiment of Positive Electrode Mixture

A positive electrode mixture according to one embodiment of the present invention includes a sulfur-based active material; a carbon material having pores; at least one of an ion conductor containing a phosphorus element and a modified product of the ion conductor; and a solid electrolyte. In addition, in a P2p spectrum in its surface elemental analysis by X-ray photoelectron spectroscopy, at least one of the following formulas (1) and (2) is satisfied: ${I}_{A} / {I}_{B} > 0.50$ (1) ${I}_{C} / {I}_{B} > 1.20$ (2) wherein I_{A} represents a signal intensity at a position A where a binding energy is around 135.4 eV, I_{B} represents a signal intensity at a position B where the binding energy is around 134.25 eV, and I_{C} represents a signal intensity at a position C where the binding energy is around 133.0 eV.

The term "around" means that the position of the binding energy may slightly vary depending on a measuring apparatus and the like. For example, the position A means a peak appearing within the range of 135.0 eV or more and 136.5 eV or less, the position B means a peak appearing within the range of 133.5 eV or more and less than 134.5 eV, and the position C means a peak appearing within the range of 132.0 eV or more and less than 133.3 eV. In addition, when a clear peak does not appear at each position, a binding energy of 135.4 eV is set as the position A, a binding energy of 134.25 eV is set as the position B, and a binding energy of 133.0 eV is set as the position C.

The position B of the P2p spectrum is the position of the peak top of P₂S₅, and the signal intensity at the position B may include the signal intensity of P₂S₅. The signal intensities at the position A and the position C are derived from the modified product of the ion conductor. The fact that the signal intensity ratios I_{A}/I_{B} and I_{C}/I_{B} are large indicates that the ratio of the modified product is high relative to P₂S₅. In the positive electrode mixture of this embodiment, at least one of the signal intensity ratios I_{A}/I_{B} and I_{C}/I_{B} is higher than that in the related art in which an ion conductor is mechanically mixed in a solid state with a sulfur-based active material and a carbon material. The foregoing may indicate that the sulfur-based active material, the carbon material, and the ion conductor and the modified product of the ion conductor form an interface in a form different from a conventional one. As a result, ion conduction paths in the positive electrode mixture are efficiently formed, and hence a positive electrode mixture capable of improving the charge-discharge characteristics of a lithium ion battery is obtained.

Details of P2p spectrum analysis are as described in Examples.

In one embodiment, the ratio I_{C}/I_{B} is preferably larger than 1.30, more preferably 1.30 or more, still more preferably 1.40 or more, particularly preferably 1.60 or more. The ratio I_{C}/I_{B} is, for example, 3.00 or less.

In the positive electrode mixture according to one embodiment of the present invention, the rate of change in elemental ratio C/P of a carbon element to a phosphorus element by its surface elemental analysis by X-ray photoelectron spectroscopy before and after Ar sputtering treatment is 0.550 or more.

The Ar sputtering treatment is treatment for scraping the surface layer of the positive electrode mixture and measuring the internal state of the positive electrode mixture. The rate of change (R_{A}) in elemental ratio C/P indicates a change in elemental ratio between the outermost surface of the positive electrode mixture and the inside thereof, and is calculated from the following equation.${R}_{A} = \left(elemental ratio C/P inside\right) / \left(elemental ratio C/P on surface\right)$

The fact that the ratio R_{A} is 1 means that elemental compositions inside, and on the surface of, the positive electrode mixture are equal, and indicates that as its difference from 1 increases, a difference in elemental composition between the inside and the surface increases. Owing to an influence of, for example, the sputtering rate of Ar sputtering, the elemental ratio C/P inside the positive electrode mixture tends to be smaller than that on the surface thereof. Meanwhile, as a property in the positive electrode mixture of this embodiment, phosphorus (P) tends to be unevenly distributed on the surface and carbon (C) tends to be unevenly distributed inside the positive electrode mixture. From a relationship between the influence of Ar sputtering and the property of the positive electrode mixture, in the positive electrode mixture of this embodiment, the rate of change (R_{A}) in elemental ratio C/P is as large as 0.550 or more.

The rate of change in elemental ratio C/P is preferably 0.600 or more, more preferably 0.650 or more, particularly preferably 0.700 or more. The rate of change in elemental ratio C/P is, for example, 0.900 or less.

Details of the measurement of the rate of change in elemental ratio C/P are as described in Examples.

In the positive electrode mixture according to one embodiment of the present invention, in its solid-state ³¹P-NMR measurement, the total of the areas of the peak of P₂S₆⁴⁻ and the peak of PS₃⁻ is 20% or more of the entirety. The solid-state ³¹P-NMR measurement can identify the state of a phosphorus element near the surface of the positive electrode mixture. In this embodiment, the sulfur-based active material, the carbon material, and the ion conductor and the modified product of the ion conductor form an interface in a form different from a conventional one. The fact that the total of the areas of the peak of P₂S₆⁴⁻ and the peak of PS₃⁻ is 20% or more of the entirety indicates that the interface is different from that of the related-art positive electrode mixture.

In the positive electrode mixture according to one embodiment of the present invention, in its solid-state ³¹P-NMR measurement, the area of the peak of P₂S₅ is 25% or less of the entirety. As described above, in this embodiment, the sulfur-based active material, the carbon material, and the ion conductor and the modified product of the ion conductor form an interface in a form different from a conventional one. As a result, the area of the peak of P₂S₅ becomes 25% or less of the entirety.

Details of the solid-state ³¹P-NMR measurement are as described in Examples.

In one embodiment, the positive electrode mixture includes the sulfur-based active material; the carbon material having pores; at least one of the ion conductor and the modified product of the ion conductor; and the solid electrolyte, and a specific surface area parameter "x" is 5.00 or less.

In one embodiment, the positive electrode mixture includes the sulfur-based active material; the carbon material having pores; at least one of the ion conductor and the modified product of the ion conductor; and the solid electrolyte, and the ion conductor is amorphous.

In one embodiment, the mass ratio of the total of the sulfur-based active material (S), and the ion conductor containing a phosphorus element and the modified product of the ion conductor is smaller than 5.00 to the carbon material (C). For example, when the ion conductor is phosphorus pentasulfide, the mass ratio [(S+P₂S₅)/C] is smaller than 5.00. When the mass ratio is less than 5.00, the charge-discharge characteristics of a lithium ion battery are further improved. The above-mentioned mass ratio may be 4.80 or less, 4.50 or less, 4.30 or less, 4.00 or less, 3.70 or less, or 3.50 or less.

The above-mentioned mass ratio may be adjusted by the blending amount of each constituent material.

### 2. Method of producing Positive Electrode Mixture

The positive electrode mixture of this embodiment may be produced, for example, by a method of the present invention including the following steps:
Step (A): mixing at least one of a composite or a mixture of a sulfur-based active material and a carbon material having pores with an ion conductor in a molten state to prepare a positive electrode mixture precursor; and
Step (B): mixing and pulverizing the positive electrode mixture precursor of the step (A) and a solid electrolyte to produce a positive electrode mixture.

In one embodiment, the positive electrode mixture is obtained by the production method of the present invention. The positive electrode mixture precursor and the method of producing the positive electrode mixture are described below.

### [Step (A)]

In the step (A), at least one of the composite or mixture of the sulfur-based active material and the carbon material having pores is mixed with the ion conductor in a molten state to prepare the positive electrode mixture precursor.

Although the sulfur-based active material is not particularly limited, examples thereof include sulfur, lithium sulfide (Li₂S), lithium polysulfide (Li₂Sₙ: "n" satisfies 1<n≤8), titanium sulfide (TiS₂), molybdenum sulfide (MoS₂), iron sulfide (FeS or FeS₂), copper sulfide (CuS), nickel sulfide (Ni₃S₂), and sulfur-containing polymer compounds. Of those, sulfur is preferred.

Although sulfur is not particularly limited, sulfur having as high a purity as possible is preferred. Specifically, the purity is preferably 95% by mass or more, more preferably 96% by mass or more, particularly preferably 97% by mass or more.

Examples of the crystal system of sulfur include α-sulfur (orthorhombic), β-sulfur (monoclinic), γ-sulfur (monoclinic), and amorphous sulfur. These may be used alone, or two or more kinds thereof may be used in combination.

A lithium ion conductive material containing a phosphorus element or a precursor thereof may be used as the ion conductor.

The lithium ion conductive material is, for example, a lithium ion conductive material containing one or more kinds of elements selected from lithium, boron, oxygen, sulfur, phosphorus, a halogen, and antimony, or a precursor thereof. The lithium ion conductive material is preferably a lithium ion conductive material containing a phosphorus element, and one or more kinds of elements selected from lithium, boron, sulfur, and oxygen, or a precursor thereof. A lithium ion conductive material containing no phosphorus element may be used in combination with the lithium ion conductive material containing a phosphorus element.

The term "lithium ion conductive material containing one or more kinds of elements selected from lithium, boron, oxygen, sulfur, phosphorus, a halogen, and antimony" as used herein means a material that maintains a solid at 25°C under a nitrogen atmosphere and has an ionic conductivity resulting from a lithium ion. In addition, the term "precursor of a lithium ion conductive material containing one or more kinds of elements selected from lithium, boron, oxygen, phosphorus, a halogen, and antimony" means a material, which forms a compound containing lithium by reacting with a lithium metal or a lithium ion when used as an active material of a lithium ion battery, and which becomes the above-mentioned lithium ion conductive material.

The term "halogen" as used herein means elements, such as fluorine, chlorine, bromine, and iodine.

The melting point of the ion conductor is preferably from 130°C to 450°C, more preferably from 220°C to 450°C because the ion conductor is turned into a melt by heating. In addition, the melting point of the ion conductor is preferably as low as possible, for example, 440°C or less, 430°C or less, 420°C or less, 410°C or less, or 400°C or less. Elemental sulfur, which is listed as an example of the sulfur-based active material, has a boiling point of about 450°C. It is conceivable that when elemental sulfur is mixed with a melt of a substance having a melting point equal to or more than the boiling point, elemental sulfur volatilizes to make it impossible to obtain a desired positive electrode mixture precursor. In addition, when a temperature in the step is lowered, energy at the time of the production of the positive electrode mixture precursor can be reduced, and the reduction leads to a reduction in cost.

Examples of the lithium ion conductive material include lithium borohydride, LiBF₄, an organic lithium salt, and a polymer electrolyte such as polyethylene oxide. In addition, examples of the precursor of the lithium ion conductive material include phosphorus sulfide such as phosphorus pentasulfide; red phosphorus; boron sulfide; phosphorus pentoxide; and tin. These compounds may be used alone, or two or more kinds thereof may be used in combination.

Examples of the organic lithium salt include lithium salts of bis(perfluoroalkylsulfonyl)imides, such as lithium bis(trifluoromethanesulfonyl)imide, lithium bis(fluorosulfonyl)imide, lithium (fluorosulfonyl)(trifluoromethanesulfonyl)imide, lithium bis(pentafluoroethanesulfonyl)imide, and lithium bis(nonafluorobutanesulfonyl)imide; lithium salts of perfluoroalkylsulfonimides such as a 4,4,5,5-tetrafluoro-1,3,2-dithiazolidine-1,1,3,3-tetraoxide lithium salt; lithium salts of fluorosulfonylimides; lithium trifluoromethanesulfonate; lithium salts of carboxylic acids, such as lithium acetate, lithium propionate, and lithium butyrate; lithium salts of organic sulfonic acids, such as lithium dodecylbenzenesulfonate and lithium p-styrenesulfonate; and lithium salts of organic phosphoric acids.

Each of those organic lithium salts is preferably used together with an ion conductive polymer or an ionic liquid. In this case, the impartment of higher lithium conductivity can be expected.

The ion conductor is preferably one or more compounds selected from the group consisting of phosphorus sulfide; red phosphorus; boron sulfide; phosphorus pentoxide; and a polymer electrolyte such as polyethylene oxide, the compounds being each substantially free of a lithium element. The ion conductor that is substantially free of a lithium element may have a high affinity for the sulfur-based active material or the carbon material.

The ion conductor is more preferably one or more compounds selected from the group consisting of phosphorus sulfide; red phosphorus; and phosphorus pentoxide.

Examples of phosphorus sulfide include phosphorus trisulfide (P₄S₃), phosphorus pentasulfide (P₂S₅), phosphorus heptasulfide (P₄S₇), and tetraphosphorus pentasulfide (P₄S₅). In addition, phosphorus sulfide may have a dimer or polysulfide structure, or may be a mixture thereof. The ion conductor is particularly preferably phosphorus pentasulfide, which is expected to react with lithium to form a sulfide solid electrolyte showing high ion conductivity.

The content of phosphorus sulfide or phosphorus pentasulfide with respect to the entirety of the ion conductor is 50% by mass or more, 80% by mass or more, 95% by mass or more, or 99% by mass or more, and is substantially 100% by mass. When the content is substantially 100% by mass, an unavoidable impurity may be included.

Examples of the carbon material having pores include carbon black, such as ketjen black, acetylene black, Denka black, thermal black, channel black, or CNovel (trademark); graphite; and activated carbon. These may be used alone, or two or more kinds thereof may be used in combination.

In one embodiment, the BET specific surface area of the carbon material is 50 m²/g or more and 6,000 m²/g or less. Thus, a wide contact interface between the carbon material and the sulfur-based active material can be formed, and hence the utilization ratio of the sulfur-based active material can be increased.

The BET specific surface area is 70 m²/g or more, 100 m²/g or more, 1,000 m²/g or more, 1,500 m²/g or more, 2,000 m²/g or more, 2,500 m²/g or more, or 3,000 m²/g or more. In addition, the BET specific surface area is preferably 5,500 m²/g or less, more preferably 5,000 m²/g or less.

In addition, the pore volume of the carbon material is 0.5 cm³/g or more and 6 cm³/g or less. Thus, pores of the carbon material can be impregnated with the sulfur-based active material, and hence the capacity of a battery can be further improved.

The pore volume is preferably 0.7 cm³/g or more, more preferably 1.0 cm³/g or more. In addition, the pore volume is preferably 5.5 cm³/g or less, more preferably 5.0 cm³/g or less.

In the present invention, the BET specific surface area and the pore volume may be determined by using a nitrogen adsorption isotherm obtained by causing the carbon material to adsorb a nitrogen gas under liquid nitrogen temperature. Specifically, the BET specific surface area may be calculated by the Brenauer-Emmet-Telle (BET) multi-point method through use of the nitrogen adsorption isotherm. In addition, the pore volume may be determined by the Barrett-Joyner-Halenda (BJH) method through use of the nitrogen adsorption isotherm.

Measurement may be performed by using, for example, a specific surface area/pore distribution-measuring apparatus (Autosorb-3) manufactured by Quantacrome Instruments as a measuring apparatus.

In the production method of this embodiment, at least one of the composite or mixture of the sulfur-based active material and the carbon material having pores described above is mixed with the ion conductor in a molten state. In one embodiment, the composite of the sulfur-based active material and the carbon material having pores is prepared in advance, and then the composite is mixed with the ion conductor in a molten state. Thus, the surface of the composite, that is, each of the top of the sulfur-based active material and the top of the carbon material is covered with the ion conductor, and hence an ion conduction path among the three materials is efficiently formed. Meanwhile, it is conceivable that even when the mixture of the sulfur-based active material and the carbon material having pores is mixed with the ion conductor in a molten state, the sulfur-based active material having a melting point lower than that of the ion conductor is melted first to produce the composite of the sulfur-based active material and the carbon material having pores, and then the ion conductor is melted to produce a similar structure.

In one embodiment, a mass ratio between the sulfur-based active material (S) and the carbon material (C) is from 1:9 to 9:1, preferably from 5:5 to 9:1.

A method of forming the composite of the sulfur-based active material and the carbon material having pores is not particularly limited. For example, the sulfur-based active material and the carbon material may be mixed and pulverized to be formed into a composite with a mixing pulverizer such as a planetary ball mill. Alternatively, the sulfur-based active material and the carbon material may be formed into a composite by being heated to a temperature equal to or more than the melting point of the sulfur-based active material in a sealed state.

The mixing of at least one of the composite or mixture of the sulfur-based active material and the carbon material having pores with the ion conductor in a molten state may be performed by heating at a temperature equal to or more than the melting point of the ion conductor. A heating temperature is adjusted in accordance with the ion conductor to be used. A substance having sublimability at normal pressure may be pressurized and mixed in a molten state. A heating time is preferably from 10 minutes to 24 hours.

The cooling of the mixture after the heating provides a positive electrode mixture precursor. A pulverization step may be performed after the cooling as required.

In one embodiment, a mass ratio among the sulfur-based active material, carbon material, and ion conductor of the positive electrode mixture precursor satisfies the following relationship:
(sulfur-based active material+carbon material):ion conductor = 50:1 to 80.
It is preferably (sulfur-based active material+carbon material):ion conductor = 50:5 to 60.

In one embodiment, the mass ratio of the total of the sulfur-based active material (S) and the ion conductor is smaller than 5.00 to the carbon material (C). For example, when the ion conductor is phosphorus pentasulfide, the mass ratio [(S+P₂S₅)/C] is smaller than 5.00. When the mass ratio is less than 5.00, the charge-discharge characteristics of a lithium ion battery are further improved. The above-mentioned mass ratio may be 4.80 or less, 4.50 or less, 4.30 or less, 4.00 or less, 3.70 or less, or 3.50 or less. In addition, the above-mentioned mass ratio is 2.00 or more, 2.60 or more, or 3.20 or more.

The above-mentioned mass ratio may be adjusted by the blending amount of each constituent material.

### [Step (B)]

In the step (B), the positive electrode mixture precursor of the step (A) and the solid electrolyte are mixed and pulverized to produce the positive electrode mixture. Although the solid electrolyte is not particularly limited, the solid electrolyte is, for example, a sulfide solid electrolyte used in a lithium ion battery to be described later.

The mixing of the positive electrode mixture precursor and the solid electrolyte is not particularly limited, and may be adjusted in accordance with the characteristics of the solid electrolyte to be used. For example, when the solid electrolyte is crystalline and the maintenance of a crystal affects its performance, the mixing of the positive electrode mixture precursor and the solid electrolyte is performed with a relatively weak force.

A mixing apparatus for the positive electrode mixture precursor and the solid electrolyte is, for example, a planetary ball mill, a tumbling mill, a bead mill, Filmix, a Nauta mixer, a Tornado mixer, a twin-screw extruder, a multi-screw roller, or a solid-phase shear kneader.

In one embodiment, the solid electrolyte is a crystalline solid electrolyte, and is mixed and pulverized under a condition where the crystallinity of the solid electrolyte does not disappear, to thereby produce the positive electrode mixture. For the mixing and pulverizing under the condition where the crystallinity does not disappear, for example, an apparatus such as a tumbling mill having a relatively small impact force may be used. In addition, the mixing and pulverizing may be performed in a state of a lower load than usual by adjusting conditions such as the number of revolutions. Whether or not the crystallinity of the solid electrolyte is maintained may be recognized by, for example, the presence of a crystal peak and a change in full width at half maximum by X-ray diffraction measurement.

### 3. Lithium Ion Battery

A lithium ion battery according to one embodiment of the present invention includes the above-mentioned positive electrode mixture of the present invention. For example, an all-solid-state lithium ion battery may be produced by using a solid electrolyte instead of a liquid electrolyte. An all-solid-state lithium ion battery having satisfactory charge-discharge characteristics may be produced by using the positive electrode mixture of the present invention. The all-solid-state lithium ion battery is described below.

The all-solid-state lithium ion battery mainly includes a positive electrode layer, a negative electrode layer, and an electrolyte layer, and the positive electrode mixture of the present invention is suitable as a constituent material for the positive electrode layer. The negative electrode layer and the electrolyte layer may each be produced by a known method. In addition, a current collector is preferably used in addition to the positive electrode layer, the negative electrode layer, and the electrolyte layer, and a known current collector is used.

The solid electrolyte is not particularly limited, but is, for example, a sulfide solid electrolyte.

The sulfide solid electrolyte is a solid electrolyte that contains at least a sulfur atom and expresses an ion conductivity resulting from a lithium ion. It is a solid electrolyte that contains preferably a lithium atom and a phosphorus atom, more preferably a lithium atom, a phosphorus atom, and a halogen atom in addition to the sulfur atom, and has an ion conductivity resulting from the lithium atom.

The sulfide solid electrolyte may be an amorphous sulfide solid electrolyte, or may be a crystalline sulfide solid electrolyte.

### (Amorphous Sulfide Solid Electrolyte)

Any electrolyte may be adopted as the amorphous sulfide solid electrolyte without any particular limitation as long as the electrolyte contains at least a sulfur atom and expresses an ion conductivity resulting from a lithium ion. Typical preferred examples thereof include a solid electrolyte containing a sulfur atom, a lithium atom, and a phosphorus atom, the electrolyte including lithium sulfide and phosphorus sulfide, such as Li₂S-P₂S₅; a solid electrolyte including lithium sulfide, phosphorus sulfide, and a lithium halide, such as Li₂S-P₂S₅-LiI, Li₂S-P₂S₅-LiCl, Li₂S-P₂S₅-LiBr, or Li₂S-P₂S₅-LiI-LiBr; and a solid electrolyte further containing any other element, such as an oxygen element or a silicon element, in addition to a sulfur element, such as Li₂S-P₂S₅-Li₂O-LiI or Li₂S-SiS₂-P₂S₅-LiI. From the viewpoint of obtaining a higher ion conductivity, a solid electrolyte including lithium sulfide, phosphorus sulfide, and a lithium halide, such as Li₂S-P₂S₅-LiI, Li₂S-P₂S₅-LiCl, Li₂S-P₂S₅-LiBr, or Li₂S-P₂S₅-LiI-LiBr, is preferred.

The kind of an element for forming the amorphous sulfide solid electrolyte may be identified with, for example, an ICP optical emission spectrometer.

When the amorphous sulfide solid electrolyte includes at least Li₂S-P₂S₅, a molar ratio between Li₂S and P₂S₅ is preferably 65 to 85:15 to 35, more preferably 70 to 80:20 to 30, still more preferably 72 to 78:22 to 28 from the viewpoint of obtaining high chemical stability and a higher ion conductivity.

When the amorphous sulfide solid electrolyte is, for example, Li₂S-P₂S₅-LiI-LiBr, the total of the contents of lithium sulfide and phosphorus pentasulfide is preferably from 60 mol% to 95 mol%, more preferably from 65 mol% to 90 mol%, still more preferably from 70 mol% to 85 mol%. In addition, the ratio of lithium bromide to the total of lithium bromide and lithium iodide is preferably from 1 mol% to 99 mol%, more preferably from 20 mol% to 90 mol%, still more preferably from 40 mol% to 80 mol%, particularly preferably from 50 mol% to 70 mol%.

When the amorphous sulfide solid electrolyte contains a lithium atom, a sulfur atom, a phosphorus atom, and a halogen atom, a blending ratio (molar ratio) among these atoms is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, still more preferably 1.2 to 1.6:1.3 to 1.7:0.25 to 0.5:0.08 to 0.4.

In addition, when bromine and iodine are used in combination as halogen atoms, a blending ratio (molar ratio) among the lithium atom, the sulfur atom, the phosphorus atom, a bromine atom, and an iodine atom is preferably 1.0 to 1.8:1.0 to 2.0:0.1 to 0.8:0.01 to 0.3:0.01 to 0.3, more preferably 1.1 to 1.7:1.2 to 1.8:0.2 to 0.6:0.02 to 0.25:0.02 to 0.25, more preferably 1.2 to 1.6:1.3 to 1.7:0.25 to 0.5:0.03 to 0.2:0.03 to 0.2, still more preferably 1.35 to 1.45:1.4 to 1.7:0.3 to 0.45:0.04 to 0.18:0.04 to 0.18. When the blending ratio (molar ratio) among the lithium atom, the sulfur atom, the phosphorus atom, and the halogen atoms is set within the above-mentioned ranges, it becomes easier to obtain a solid electrolyte having a higher ion conductivity, the electrolyte having a thio-LISICON Region II-type crystal structure to be described later.

In addition, although the shape of the amorphous sulfide solid electrolyte is not particularly limited, the shape may be, for example, a particulate shape. The average particle diameter (D₅₀) of a particulate amorphous sulfide solid electrolyte may fall within the range of, for example, from 0.01 µm to 500 µm, or from 0.1 µm to 200 µm.

The term "average particle diameter (D₅₀)" as used herein refers to a particle diameter defined as follows: when a particle diameter distribution cumulative curve is drawn, the numbers of particles are sequentially added up from the number of particles each having the smallest particle diameter; and the particle diameter at which the resultant value reaches 50% of the total number of the particles is defined as the average particle diameter. The term "volume distribution average particle diameter" refers to an average particle diameter that may be measured with, for example, a laser diffraction/scattering particle diameter distribution-measuring apparatus.

### (Crystalline Sulfide Solid Electrolyte)

The crystalline sulfide solid electrolyte may be, for example, a so-called glass ceramic obtained by heating the above-mentioned amorphous sulfide solid electrolyte to a temperature equal to or more than its crystallization temperature, and sulfide solid electrolytes having the following crystal structures may each be adopted.

A crystal structure that a crystalline sulfide solid electrolyte containing a lithium atom, a sulfur atom, and a phosphorus atom may have is, for example, a Li₃PS₄ crystal structure, a Li₄P₂S₆ crystal structure, a Li₇PS₆ crystal structure, a Li₇P₃S₁₁ crystal structure, or a crystal structure having peaks near Bragg angles 2θ of 20.2° and 23.6° (e.g., JP 2013-16423 A).

In addition, a crystal structure that a crystalline sulfide solid electrolyte containing a lithium atom, a sulfur atom, a phosphorus atom, and a halogen atom may have is, for example, a Li₄₋ₓGe₁₋ₓPₓS₄-based thio-LISICON Region II-type crystal structure (see Kanno et al., Journal of The Electrochemical Society, 148(7) A742-746 (2001)) or a crystal structure similar to the Li₄₋ₓGe₁₋ₓPₓS₄-based thio-LISICON Region II type (see Solid State Ionics, 177 (2006), 2721-2725)). The term "thio-LISICON Region II-type crystal structure" as used herein refers to any of a Li₄₋ₓGe₁₋ₓPₓS₄-based thio-LISICON Region II-type crystal structure and the crystal structure similar to the Li₄₋ₓGe₁₋ₓPₓS₄-based thio-LISICON Region II type.

In X-ray diffraction measurement with a CuKa ray, the diffraction peaks of the Li₃PS₄ crystal structure appear near, for example, Bragg angles 2θ of 17.5°, 18.3°, 26.1°, 27.3°, and 30.0°. The diffraction peaks of the Li₄P₂S₆ crystal structure appear near, for example, Bragg angles 2θ of 16.9°, 27.1°, and 32.5°. The diffraction peaks of the Li₇PS₆ crystal structure appear near, for example, Bragg angles 2θ of 15.3°, 25.2°, 29.6°, and 31.0°. The diffraction peaks of the Li₇P₃S₁₁ crystal structure appear near, for example, Bragg angles 2θ of 17.8°, 18.5°, 19.7°, 21.8°, 23.7°, 25.9°, 29.6°, and 30.0°. The diffraction peaks of the Li₄₋ₓGe₁₋ₓPₓS₄-based thio-LISICON Region II-type crystal structure appear near, for example, Bragg angles 2θ of 20.1°, 23.9°, and 29.5°. The diffraction peaks of the crystal structure similar to the Li₄₋ₓGe₁₋ₓPₓS₄-based thio-LISICON Region II type appear near, for example, Bragg angles 2θ of 20.2° and 23.6°. Those peak positions may each vary within the range of ±0.5°.

In addition, the crystal structure of the crystalline sulfide solid electrolyte is, for example, an argyrodite-type crystal structure. Examples of the argyrodite-type crystal structure include a Li₇PS₆ crystal structure; crystal structures represented by the composition formulae Li₇₋ₓP_{1-y}Si_{y}S₆ and Li₇₊ₓP_{1-y}Si_{y}S₆ ("x" represents from -0.6 to 0.6 and "y" represents from 0.1 to 0.6), the structures each having a Li₇PS₆ structural skeleton; a crystal structure represented by Li_{7-x-2y}PS_{6-x-y}Clₓ (0.8≤x≤1.7 and 0<y≤-0.25x+0.5); and a crystal structure represented by Li₇₋ₓPS₆₋ₓHaₓ (Ha represents Cl or Br, and "x" preferably represents from 0.2 to 1.8).

The crystal structure of the crystalline sulfide solid electrolyte is preferably the Li₃PS₄ crystal structure, the thio-LISICON Region II-type crystal structure, or the argyrodite-type crystal structure out of the above-mentioned crystal structures.

Although the shape of the crystalline sulfide solid electrolyte is not particularly limited, the shape may be, for example, a particulate shape. As in the average particle diameter (D₅₀) of the amorphous sulfide solid electrolyte described above, the average particle diameter (D₅₀) of a particulate crystalline sulfide solid electrolyte may fall within the range of, for example, from 0.01 µm to 500 µm, or from 0.1 µm to 200 µm.

### 4. Other Embodiments of Positive Electrode Mixture

A positive electrode mixture according to one embodiment of the present invention includes a sulfur-based active material; a carbon material having pores; at least one of an ion conductor and a modified product of the ion conductor; and a solid electrolyte, and
the rate of change in elemental ratio C/P of a carbon element to a phosphorus element by its surface elemental analysis by X-ray photoelectron spectroscopy before and after Ar sputtering treatment is 0.550 or more.

A positive electrode mixture according to one embodiment of the present invention includes a sulfur-based active material; a carbon material having pores; at least one of an ion conductor and a modified product of the ion conductor; and a solid electrolyte,
the ion conductor contains phosphorus sulfide, and
in its solid-state ³¹P-NMR measurement, the total of the areas of the peak of P₂S₆⁴⁻ and the peak of PS₃⁻ is 20% or more of the entirety.

A positive electrode mixture according to one embodiment of the present invention includes a sulfur-based active material; a carbon material having pores; at least one of an ion conductor and a modified product of the ion conductor; and a solid electrolyte,
the ion conductor contains phosphorus sulfide, and
in its solid-state ³¹P-NMR measurement, the area of the peak of P₂S₅ is 25% or less of the entirety.

Any of the positive electrode mixtures of the above-mentioned respective aspects is obtained, for example, by the above-mentioned production method of the present invention.

### Examples

### [Solid Electrolyte]

### Production Example 1 (Production of Solid Electrolyte A)

0.4398 g of lithium sulfide, 0.7084 g of phosphorus pentasulfide, 0.2133 g of lithium iodide, 0.1384 g of lithium bromide, and 10 zirconia-made balls each having a diameter of 10 mm were loaded into a 45 mL zirconia-made pot, and the pot was sealed. The materials were mixed (mechanically milled) with a planetary ball mill device (manufactured by Fritsch, model number: P-7) at a rotation speed of 370 rpm for 40 hours to provide powder. The resultant powder was heated at 195°C for 3 hours to provide a solid electrolyte A.

### Production Example 2 (Production of Solid Electrolyte B)

15.3 g of lithium sulfide and 24.7 g of phosphorus pentasulfide were loaded into a 1 L reaction tank with a stirring blade under a nitrogen atmosphere. The stirring blade was operated, and then 400 mL of tetrahydrofuran cooled to -20°C was loaded into the container. After the temperature of the mixture had been naturally increased to room temperature, the mixture was stirred for 72 hours, and the resultant reaction liquid slurry was loaded into a glass filter (pore size: from 40 µm to 100 µm) to provide a solid content. The solid content was dried at 90°C to provide Li₃PS₄ powder (purity: 90% by mass). 1.70 g of the resultant Li₃PS₄ powder, 0.19 g of lithium bromide, and 0.28 g of lithium iodide were loaded into a Schlenk flask with a stirring bar (capacity: 100 mL) under a nitrogen atmosphere. After the stirring bar had been rotated, 20 mL of tetramethylethylenediamine (TMEDA) serving as a complexing agent was added to the mixture, and the whole was stirred for 12 hours. The resultant electrolyte precursor-containing material was dried under a vacuum at room temperature to provide a powder electrolyte precursor. The resultant electrolyte precursor was heated at 120°C for 2 hours under a vacuum, and was further heated at 140°C for 2 hours under a vacuum to provide a solid electrolyte B.

### Production Example 3 (Production of Solid Electrolyte C)

Lithium sulfide (Li₂S), phosphorus pentasulfide (P₂S₅), lithium bromide (LiBr), and lithium chloride (LiCl) were weighed so that their molar ratio "Li₂S:P₂S₅:LiBr:LiCl" became 47.5:12.5:15.0:25.0, followed by rough mixing under a nitrogen atmosphere.

The raw material mixture was dispersed in a mixed solvent, which had been obtained by adding 2% by mass of dehydrated isobutyronitrile with respect to the raw material mixture to dehydrated toluene, to prepare a slurry having a concentration of about 10% by mass.

A bead mill was operated under the conditions of a peripheral speed of 12 m/s and a flow rate of 500 mL/min, and the slurry was loaded into the mill, followed by a circulation operation for 1 hour. Thus, a mixture was obtained.

After the solvent of the resultant mixture had been removed, the residue was heated at from 400°C to 430°C for 2 hours in an electric furnace. After that, the heated product was slowly cooled to provide a raw material sulfide solid electrolyte.

Under a nitrogen atmosphere, the raw material sulfide solid electrolyte was dispersed in dehydrated toluene, and the dispersion was loaded into the zirconia-made pot of a planetary ball mill device (manufactured by Fritsch: model number: P-7) together with zirconia-made balls each having a diameter of 0.3 mm, followed by the establishment of an inert atmosphere in the pot. The resultant was treated for 2 hours at a number of revolutions of the planetary ball mill of 150 rpm to provide a slurry containing an atomized sulfide solid electrolyte. After the slurry had been transferred to a Schlenk flask purged with nitrogen, the slurry was dried at room temperature for 1 hour with a vacuum pump, and was then heated to from 80°C to 100°C so that a solvent in the atomized sulfide solid electrolyte was further removed (dried under reduced pressure). Thus, a solid electrolyte C was obtained.

### [Positive Electrode Mixture]

### Example 1

### (1) Production of Composite of Activated Carbon and Sulfur (S-C Composite)

Activated carbon (manufactured by Kansai Coke and Chemicals Co., Ltd., MSC-30SSS) and sulfur were loaded into a glass bottle at a mass ratio of 3:7, and were sealed in a SUS tube container. The mixture was heated in an electric furnace at 150°C for 6 hours and at 300°C for 2.75 hours to provide powder of a composite of activated carbon and sulfur.

### (2) Production of Positive Electrode Mixture Precursor

The powder of the composite obtained in the above-mentioned section (1) and phosphorus pentasulfide (manufactured by Italmatch Chemicals S.p.A, melting point: from 286°C to 290°C) were loaded into a Tammann tube having an inner diameter of 12 mm at a mass ratio of 0.7143:0.2857, and were sealed in a SUS tube container. The mixture was heated in an electric furnace at 350°C for 6 hours to provide a positive electrode mixture precursor.

### (3) Production of Positive Electrode Mixture

0.6300 g of the positive electrode mixture precursor of the above-mentioned section (2) and 0.2700 g of the solid electrolyte A were loaded into a 45 mL zirconia-made pot together with 34 g of zirconia-made balls each having a diameter of 2 mm, and the pot was sealed. The materials were mixed for 1 hour at room temperature and a rotation speed of 600 rpm with a tumbling mill ("small ball mill stand", manufactured by Asahi Rika Seisakusho, model number: AV-1) to provide positive electrode mixture powder.

### Example 2

A positive electrode mixture precursor was prepared in the same manner as in Example 1 except that the powder of the S-C composite obtained in the above-mentioned section (1) of Example 1 and phosphorus pentasulfide (manufactured by Italmatch Chemicals S.p.A, melting point: from 286°C to 290°C) were loaded into a Tammann tube having an inner diameter of 12 mm at a mass ratio of 0.8333:0.1667.

Positive electrode mixture powder was obtained in the same manner as in Example 1 except that 0.5400 g of the positive electrode mixture precursor and 0.3600 g of the solid electrolyte A were used.

### Example 3

Positive electrode mixture powder was obtained in the same manner as in Example 1 except that 0.6300 g of the positive electrode mixture precursor prepared in the section (2) of Example 1 and 0.2700 g of the solid electrolyte B were used.

### Example 4

Positive electrode mixture powder was obtained in the same manner as in Example 1 except that 0.6300 g of the positive electrode mixture precursor prepared in the section (2) of Example 1 and 0.2700 g of the solid electrolyte C were used.

### Example 5

### (1) Production of Positive Electrode Mixture Precursor

Activated carbon (manufactured by Kansai Coke and Chemicals Co., Ltd., MSC-30SSS), sulfur, and phosphorus pentasulfide (manufactured by Italmatch Chemicals S.p.A, melting point: from 286°C to 290°C) were loaded into a Tammann tube having an inner diameter of 12 mm at a mass ratio of 0.2143:0.5000:0.2857, and were sealed in a SUS tube container. The mixture was heated in an electric furnace at 350°C for 6 hours to provide a positive electrode mixture precursor.

### (2) Production of Positive Electrode Mixture

0.6300 g of the positive electrode mixture precursor of the above-mentioned section (1) and 0.2700 g of the solid electrolyte C were loaded into a 45 mL zirconia-made pot together with 34 g of zirconia-made balls each having a diameter of 2 mm, and the pot was sealed. The materials were mixed for 1 hour at room temperature and a rotation speed of 600 rpm with a tumbling mill ("small ball mill stand", manufactured by Asahi Rika Seisakusho, model number: AV-1) to provide positive electrode mixture powder.

### Example 6

### (1) Production of Composite of Activated Carbon and Sulfur (S-C Composite)

Powder of a composite of activated carbon and sulfur was obtained in the same manner as in Example 1.

### (2) Production of Positive Electrode Mixture Precursor

A positive electrode mixture precursor was obtained in the same manner as in Example 1 except that the powder of the composite obtained in the above-mentioned section (1), phosphorus pentasulfide (manufactured by Italmatch Chemicals S.p.A, melting point: from 286°C to 290°C), and sulfur were loaded into a Tammann tube having an inner diameter of 12 mm at a mass ratio of 0.7143:0.2143:0.0714.

### (3) Production of Positive Electrode Mixture

Positive electrode mixture powder was obtained in the same manner as in Example 1 except that 0.6300 g of the positive electrode mixture precursor prepared in the above-mentioned section (2) and 0.2700 g of the solid electrolyte C were used.

### Example 7

### (1) Production of Composite of Activated Carbon and Sulfur (S-C Composite)

Powder of a composite of activated carbon and sulfur was obtained in the same manner as in Example 1.

### (2) Production of Positive Electrode Mixture Precursor

A positive electrode mixture precursor was obtained in the same manner as in Example 1 except that the powder of the composite obtained in the above-mentioned section (1), phosphorus pentasulfide (manufactured by Italmatch Chemicals S.p.A, melting point: from 286°C to 290°C), and sulfur were loaded into a Tammann tube having an inner diameter of 12 mm at a mass ratio of 0.6667:0.2666:0.0667.

### (3) Production of Positive Electrode Mixture

Positive electrode mixture powder was obtained in the same manner as in Example 1 except that 0.6750 g of the positive electrode mixture precursor prepared in the above-mentioned section (2) and 0.2250 g of the solid electrolyte C were used.

### Comparative Example 1

Positive electrode mixture powder was obtained by mixing 0.4500 g of the powder of the S-C composite obtained in the same manner as in the section (1) of Example 1 and 0.4500 g of the solid electrolyte A with a tumbling mill in the same manner as in the section (3) of Example 1.

### Comparative Example 2

Positive electrode mixture powder was obtained by mixing 0.4500 g of the powder of the S-C composite obtained in the same manner as in the section (1) of Example 1, 0.1800 g of phosphorus pentasulfide, and 0.2700 g of the solid electrolyte A with a tumbling mill in the same manner as in the section (3) of Example 1 so that a mass ratio among activated carbon, sulfur, and phosphorus pentasulfide became the same as that in Example 1.

### Comparative Example 3

Positive electrode mixture powder was obtained by mixing 0.4500 g of the powder of the S-C composite obtained in the same manner as in the section (1) of Example 1, 0.0900 g of phosphorus pentasulfide, and 0.3600 g of the solid electrolyte A with a tumbling mill in the same manner as in the section (3) of Example 1 so that a mass ratio among activated carbon, sulfur, and phosphorus pentasulfide became the same as that in Example 2.

### Reference Example 1

A positive electrode mixture precursor was obtained in the same manner as in the section (2) of Example 1 except that the powder of the S-C composite obtained in the above-mentioned section (1) of Example 1 and phosphorus pentasulfide (manufactured by Italmatch Chemicals S.p.A, melting point: from 286°C to 290°C) were loaded into a Tammann tube having an inner diameter of 12 mm at a mass ratio of 0.7143:0.2857.

### Reference Example 2

A positive electrode mixture precursor was obtained in the same manner as in the section (2) of Example 1 except that the powder of the S-C composite obtained in the above-mentioned section (1) of Example 1 and phosphorus pentasulfide (manufactured by Italmatch Chemicals S.p.A, melting point: from 286°C to 290°C) were loaded into a Tammann tube having an inner diameter of 12 mm at a mass ratio of 0.8333:0.1667.

### Reference Example 3

The powder of the S-C composite obtained in the above-mentioned section (1) of Example 1 and phosphorus pentasulfide (manufactured by Italmatch Chemicals S.p.A, melting point: from 286°C to 290°C) were loaded into an agate mortar at a mass ratio of 0.7143:0.2857, and were mixed for 5 minutes to provide a positive electrode mixture precursor.

### [Evaluation]

The following evaluations were performed on each of the positive electrode mixtures produced in Examples and Comparative Examples.

### (1) X-ray Photoelectron Spectroscopy (XPS) measurement

### (a) XPS Measurement

In a glove box controlled to an Ar atmosphere having a dew point of -60°C or less, a carbon double-sided tape was attached onto a metal substrate, and a powder sample was pressed against the tape with a spatula. A spatula whose surface had been cleaned with an organic solvent such as acetone was used as the spatula. A metal perforated mask (hole diameter: 5 mm) was placed over the tape on which the powder sample had been fixed, and the mask was fixed with a screw to produce a measurement sample. The sample was introduced into an XPS apparatus with a transfer vessel so as not to be exposed to the atmosphere, and was subjected to XPS measurement. Detailed measurement conditions of the XPS are described below.

| | |
|---|---|
| XPS apparatus: | VersaProbe II (manufactured by ULVAC-PHI, Inc.) |
| X-ray source: | The measurement was performed with a monochromatized AlKα ray (1,486.6 eV) under a high power condition of 100 W. |
| X-ray diameter: | 100 µm (measured by sweeping in a range of 200 µm×1,200 µm) |
| Pass energy: | 23.5 eV (C1s, S2p, P2p) |
| | 46.95 eV (O1s, Li1s, Br3d, I3d5/2, Cl2p) |
| Step energy: | 0.1 eV (C1s, S2p, P2p) |
| | 0.2 eV (O1s, Li1s, Br3d, I3d5/2, Cl2p) |
| Photoelectron detection angle: | 45° |

The XPS measurement was performed in the following two ways: the surface (outermost surface) of the sample, and a sample inside A obtained by cutting its surface layer.

The sample surface was subjected to the measurement immediately after the introduction of the sample into an ultrahigh vacuum (1.0×10⁻⁷ Pa or less) without performance of surface treatment to be described later. The sample inside A was subjected to the measurement after surface treatment with the following sputter ion gun.

### Sample inside A: Ar monomer ion: 1 kV, 7 mA, 2 mm×2 mm, 60 minutes

### (b) Relative Peak Intensity of Sample Surface by P2p Spectrum

MultiPak manufactured by ULVAC-PHI, Inc. was used as analysis software. A charge correction was performed by setting a peak position derived from S₈ in a spectrum derived from an S2p orbital to 164.1 eV. The background of a spectrum derived from a P2p orbital was subtracted by the Shirley method, and cps values (signal intensity: I) were extracted for the following three peaks: a peak having a binding energy around 135.4 eV (peak A), a peak having a binding energy around 134.25 eV (peak B), and a peak having a binding energy around 133.0 eV (peak C). After that, signal intensity ratios (I_{A}/I_{B} and I_{C}/I_{B}) were calculated. The term "around" means that the position of the binding energy may slightly vary depending on a measuring apparatus and the like. For example, the position A means a peak appearing within the range of 135.0 eV or more and 136.5 eV or less, the position B means a peak appearing within the range of 133.5 eV or more and less than 134.5 eV, and the position C means a peak appearing within the range of 132.0 eV or more and less than 133.3 eV. In addition, when a clear peak does not appear at each position, a binding energy of 135.4 eV is set as the position A, a binding energy of 134.25 eV is set as the position B, and a binding energy of 133.0 eV is set as the position C. The P2p relative intensity of the sample surface is a value at one point near the center in a measurement portion (diameter: 5 mm). In the measurement portion, it is recognized that the spectra of each element are almost the same at a total of three points, that is, a point near the center and two points distant from the center by about 500 µm each.

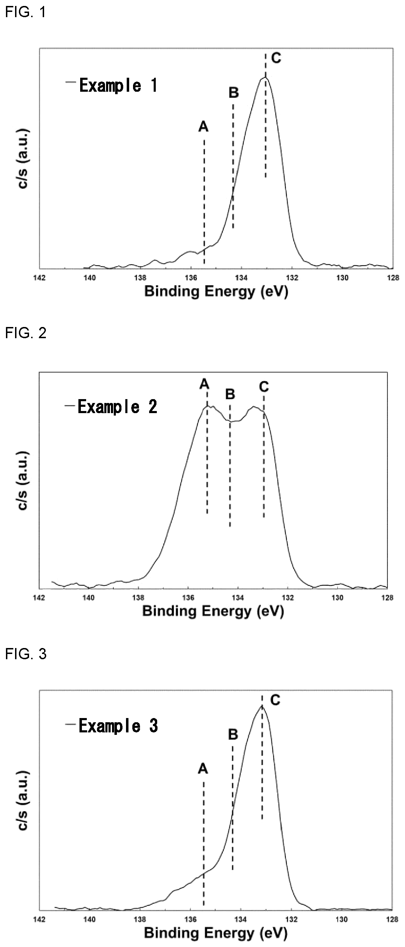

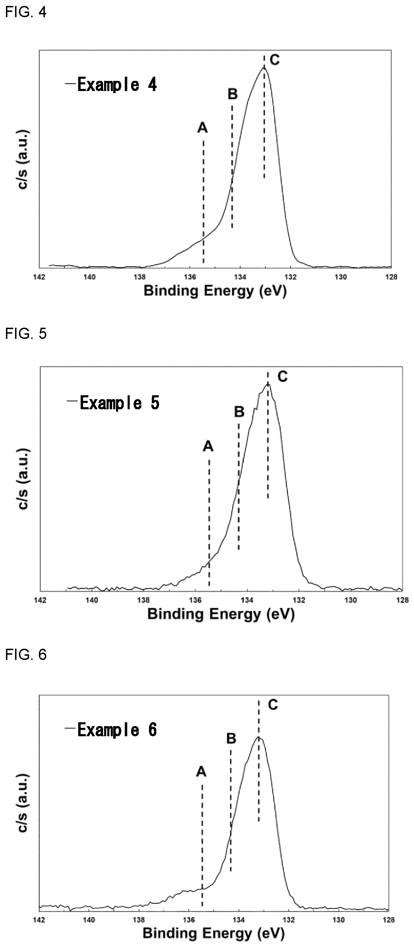

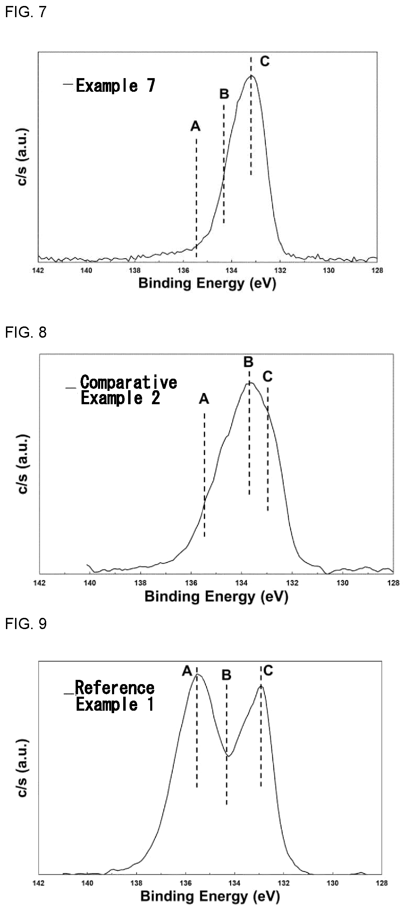

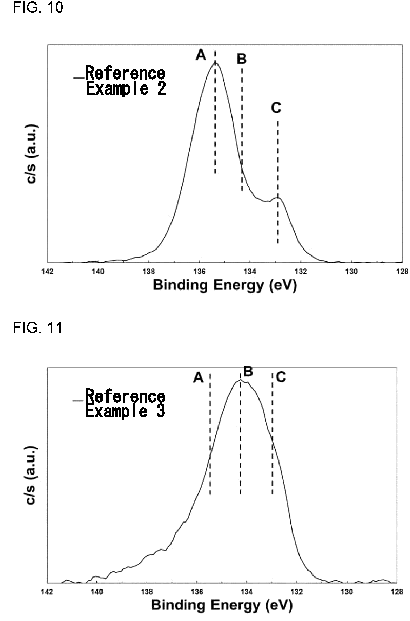

The P2p spectra of Examples 1 to 7 and Comparative Example 2 are shown in FIG. 1 to FIG. 8. The P2p spectra of Reference Examples 1 to 3 are shown in FIG. 9 to FIG. 11. In the figures, the symbol A indicates a position A where the binding energy is around 135.4 eV, the symbol B indicates a position B where the binding energy is around 134.25 eV, and the symbol C indicates a position C where the binding energy is around 133.0 eV.

### (c) Elemental Ratio C/P of Carbon Element to Phosphorus Element

MultiPak manufactured by ULVAC-PHI, Inc. was used as analysis software. A background was subtracted from each spectrum by the Shirley method, and an elemental ratio C/P was calculated from the resultant area intensity by using a relative sensitivity coefficient. The peak of a carbon element has a peak top around from 278 eV to 298 eV, and the peak of a phosphorus element has a peak top around from 123 eV to 143 eV.

The elemental ratio C/P of the sample surface was the average value of any three points in the measurement portion (diameter: 5 mm). The elemental ratio C/P of the sam[le inside A was the value of any one point in the measurement portion.

A C/P change rate R_{A} between the surface and the inside A was calculated from the following equation:${R}_{A} = \left(elemental ratio C/P of sample inside A\right) / \left(elemental ratio C/P of surface\right) .$

The evaluation results of the XPS measurement of the XPS measurement are shown in Table 1.

**Table 1**

| | State of P₂S₅ | Blending ratio (mass) | | | | (S+P2S5) /C mass ratio | I_{A}/I_{B} | I_{C}/ I _{B} | C/P change rate of Ar sputtered surface |
|---|---|---|---|---|---|---|---|---|---|
| | | Sulfur | Activated carbon | P₂S₅ | Solid electrolyte | | | | |
| Example 1 | Molten | 35 | 15 | 20 | 30 (A) | 3.67 | 0.23 | 2. 23 | 0. 717 |
| Example 2 | Molten | 35 | 15 | 10 | 40 (A) | 3. 00 | 1. 10 | 1. 06 | 0.666 |
| Example 3 | Molten | 35 | 15 | 20 | 30 (B) | 3.67 | 0.37 | 1.99 | 0. 710 |
| Example 4 | Molten | 35 | 15 | 20 | 30 (C) | 3.67 | 0.34 | 2. 19 | 0. 727 |
| Example 5 | Molten | 35 | 15 | 20 | 30 (C) | 3.67 | 0.26 | 1.74 | 0. 682 |
| Example 6 | Molten | 40 | 15 | 15 | 30 (C) | 3.67 | 0.25 | 1. 94 | 0.837 |
| Example 7 | Molten | 40 | 15 | 20 | 25 (C) | 4. 00 | 0.19 | 1. 93 | 0. 812 |
| Comparative Example 1 | Unmixed | 35 | 15 | 0 | 50 (A) | 2. 33 | - | - | - |
| Comparative Example 2 | Solid | 35 | 15 | 20 | 30 (A) | 3.67 | 0.39 | 0.86 | 0.529 |
| Comparative Example 3 | Solid | 35 | 15 | 10 | 40 (A) | 3. 00 | - | - | - |

| | | | | | | | | | |
|---|---|---|---|---|---|---|---|---|---|
| * Parentheses for the solid electrolytes indicate the kinds (A, B, and C) of used solid electrolytes. * The column "State of P₂S₅" indicates a state at the time of the mixing of a S-C composite and P₂S₅. | | | | | | | | | |

As shown in Table 1, in each of Examples, the signal intensity ratio I_{A}/I_{B} of the P2p spectrum is larger than 0.50, or the signal intensity ratio I_{C}/I_{B} is larger than 1.20.

To discuss the analysis results, the P2p spectra of the positive electrode mixture precursors of Reference Examples 1 to 3 are shown in FIG. 9 to FIG. 11. In the analysis, a peak derived from P₂S₅ appears at the position B. In Reference Example 3, the peak B appeared clearly, and the appearance suggested that P₂S₅ existed in an unchanged chemical state. Meanwhile, in each of Reference Examples 1 and 2 in which P₂S₅ was mixed in a molten state with the S-C composite, it was recognized that the peaks A and C appeared instead of the peak B. The peaks A and C each indicate the presence of a modified product of P₂S₅. P₂S₅ mixed in a molten state with the S-C composite may exist in the positive electrode mixture precursor in a chemical state different from the original state. It is inferred that the peak A indicates a component containing an element, such as O or C derived from, for example, activated carbon, in addition to P and S in P₂S₅ because the peak A appears at relatively high binding energies. A carbon material such as activated carbon generally contains C and O. The peak A may indicate a component produced by a reaction between molten P₂S₅ and part of the activated carbon inside, or on the surface of, the activated carbon. It is inferred that the peak C indicates a component like P₂Sx (5<x), which is not P₂S₅ but does not contain O, C, or the like, because the peak C appears at relatively low binding energies and a difference in binding energy from P₂S₅ is small. It is conceivable that in each of Reference Examples 1 and 2, a component produced inside, or on the surface of, the activated carbon appears as the peak C by virtue of an influence of the production of the component of the peak A at the time of the melting of P₂S₅ and a reaction with sulfur also in a molten state.

Comparison between the results of Reference Examples 1 and 2 having different blending amounts of P₂S₅ at the time of its melt mixing revealed that the peak C had a higher signal intensity in Reference Example 1 having a larger amount of P₂S₅, while the peaks A had comparable signal intensities. Accordingly, as a change of the molten P₂S₅, it is conceivable that the production of the component indicated by the peak A by a reaction inside, or on the surface of, the activated carbon preferentially occurs, the remaining portion similarly changes into the component indicated by the peak C inside, or near the surface of, the activated carbon, and both the components cover the S-C composite.

All of the foregoing results may indicate that P₂S₅ mixed in a molten state covered the periphery of the S-C composite to form a strong interface.

As can be seen from Table 1 and FIG. 1 to FIG. 8, when the solid electrolyte was mixed with the positive electrode mixture precursor in which P₂S₅ in a molten state was mixed with the S-C composite, a peak shape changed, and a relationship among the three binding energies (A to C), that is, at least one of the signal intensity ratio I_{A}/I_{B} and the signal intensity ratio I_{C}/I_{B} became high. When a solid electrolyte is added to each of the positive electrode mixture precursors of Reference Examples described above, an influence of P₂Sx (5<x) of each of many sulfide-based solid electrolytes, that is, the peak C component may appear. From that viewpoint, in each of Comparative Examples, such a shape that the peak B and the peak C are superimposed is established, and may indicate the presence of the remaining P₂S₅ and the solid electrolyte. Also in each of Examples, it can be read that the influence of the peak C is relatively increased, but it can be seen that the final peak shape varies to some extent depending on the amount of P₂S₅.

When Example 1 or the like using the positive electrode mixture precursor in which the raw material blending ratio (sulfur (S):activated carbon (C):P₂S₅) is 35:15:20 is compared to Example 2 or the like in which the blending ratio of P₂S₅ is half that of Example 1, it can be recognized that the relative intensity of the peak C is high in Example 1 or the like, and the relative intensity of the peak A is high in Example 2 or the like. This is a result of an increase in intensity of the peak C as an influence of the addition of the solid electrolyte in each of both Example 1 or the like in which the relative intensity of the peak C is high and Example 2 or the like in which the relative intensity of the peak A is high at the time of the positive electrode mixture precursor. It is conceivable from the foregoing that when the solid electrolyte was further mixed with the positive electrode mixture precursor mixed with the S-C composite under a state in which P₂S₅ was melted as in Examples, the molten P₂S₅ covered the periphery of the S-C composite to form a strong interface, and the ratio A/B of the positive electrode mixture became a certain value (e.g., 0.5) or more, or the ratio C/B became a certain value (e.g., 1.2) or more.

In addition, in each of Examples, the change rates of the C/P of the inside to the C/P on the surface of the positive electrode mixture precursor increased. Similarly to the reason described above, this is probably because in each of Examples in which the S-C composite is covered with P₂S₅ and/or the modified product of P₂S₅, the abundance ratios of each component are different between the surface of the positive electrode mixture precursor and the inside thereof extremely close to the surface, and hence an uneven distribution of each component in the depth direction thereof is promoted.

### (2) Area Ratio of Each Phosphorus Component by Solid-state ³¹P-NMR Measurement

The area ratio of each phosphorus component was measured by using the following apparatus under the following conditions.

| | |
|---|---|
| Apparatus: | ECZL400G (manufactured by JEOL Ltd.) |
| Magnetic field strength: | 400 MHz |
| Detector: | 3.2 mm AutoMAS probe |
| Solid NMR sample tube diameter: | 3.2 mm |
| Observation nucleus: | ³¹P |
| Observation frequency: | 161.835 MHz |
| Measurement temperature: | Room temperature |
| Pulse sequence: | Single pulse |
| 90° pulse length: | 3.4 µs |
| Flip angle: | 45° |
| Number of FID acquisition points: | 1,024 points |
| Waiting time after FID measurement until next pulse application: | 1,500 s |
| Number of revolutions of magic angle spinning (MAS): | 14 kHz |
| Number of scans: | 64 times |
| Measurement range: | from 400 ppm to -300 ppm |
| External reference: | NH₄H₂PO₄ (chemical shift: 1.00 ppm) |

As a data processing condition of the solid-state ³¹P-NMR measurement, an exponential function was used as a window function, and a value within a range in which the full width at half maximum of a peak did not significantly change in accordance with the signal-to-noise ratio of each sample was used as a line broadening value. The actual values of the line broadening value were described in Examples and Comparative Examples. Backward linear prediction was not used.

When peak separation was performed, the resultant solid-state ³¹P-NMR spectrum was analyzed, and a peak to be separated was determined. From each NMR peak (experimental value) on the solid-state ³¹P-NMR spectrum, the calculated value of the NMR peak and the residual sum of squares R2 were calculated by using a non-linear least squares method and performing peak separation using a Gaussian function for the calculation of the separation peak.

The following literatures 1 to 3 were referred to for the assignment of each peak obtained by the waveform separation of the solid-state ³¹P-NMR spectrum.
Literature 1: Christian Dietrich et al., J. Mater. Chem. A, 2017, 5, 18111-18119.
Literature 2: JP 6719037 B1
Literature 3: JP 7297911 B2
Literature 4: JP 2021-122029 A

For example, as disclosed in Literature 1, a peak around 125 ppm obtained as a result of the waveform separation was assigned to PS₃⁻. As disclosed in Literature 2, a peak around 106 ppm was assigned to P₂S₆⁴⁻ (amorphous), peaks around 92 ppm and 78 ppm were assigned to a thio-LISICON Region II-type crystal, and a peak around 84 ppm was assigned to a low ion conductive crystal. As disclosed in Literature 3, a peak around from 50 ppm to 60 ppm was assigned to P₂S₅. P₂S₅ in the assignment may be generally the total value of a P₄S₁₀ skeleton, which is the main component of phosphorus pentasulfide, a P₄S₉ skeleton, and the like. As disclosed in Literature 4, a peak around 86 ppm was assigned to a β-Li₃PS₄ crystal. As a peak that was not able to be assigned in Literatures 1 to 4, a peak of unknown assignment was observed at 145 ppm in Example 1.

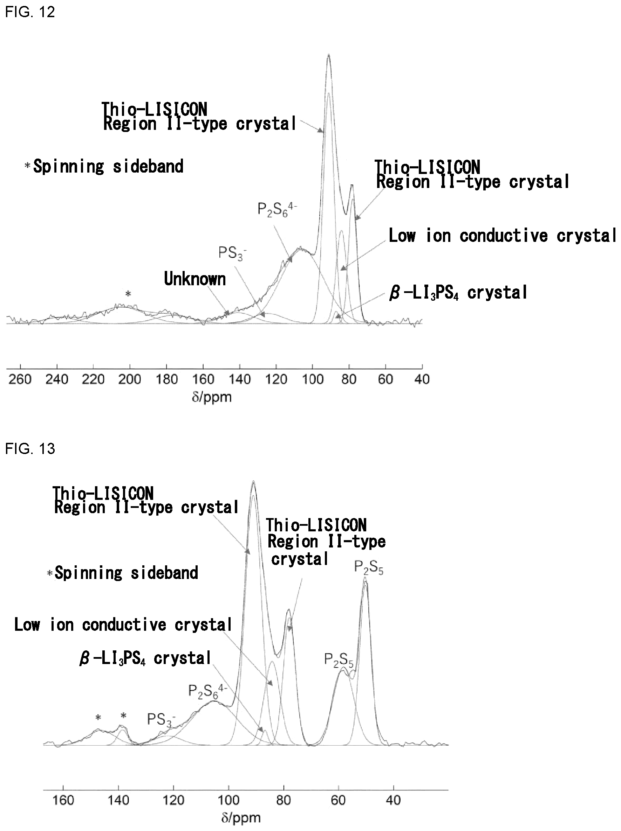

In the composition calculation of each composition obtained by the waveform separation of the solid-state ³¹P-NMR spectrum, the ratio of each component shown below was calculated as a percentage by using the area value of a separated peak. No spinning sideband peak was used for the composition calculation of each component. The area ratio (%) of each peak with respect to the total area of eight peaks shown in Table 2 was calculated. The results are shown in Table 2. The results of the waveform separation of the solid-state ³¹P-NMR spectra of Example 1 and Comparative Example 2 are shown in FIG. 12 (line broadening value: 100 Hz) and FIG. 13 (line broadening value: 100 Hz).

**Table 2**

| Phosphorus component | Example 1 | Comparative Example 2 |
|---|---|---|
| Unknown | 3.6% | 0% |
| PS₃⁻ | 5.1% | 2.3% |
| P₂S₆⁴⁻ | 38.8% | 15.3% |
| Thio-LISICON Region II-type crystal | 27.6% | 32.0% |
| *β* -Li3PS4 crystal | 0.3% | 0.6% |
| Low ion conductive crystal | 14.6% | 10.6% |
| Thio-LISICON Region II-type crystal | 10.0% | 12.1% |
| P₂S₅ | 0% | 27.1% |

It was recognized from Table 2 that when P₂S₅ was mixed in a molten state with the S-C composite as in Example, the amount of P₂S₅ was smaller than that in Comparative Example as the composition of a positive electrode mixture to be obtained, and in contrast, the amounts of P₂S₆⁴⁻ and PS₃⁻ increased. It is conceivable that in Example, the molten P₂S₅ component changed to P₂S₆⁴⁻, PS₃⁻, and the like by partially reacting with sulfur in the S-C composite, for example, inside, or near the surface of, activated carbon. The foregoing may indicate that the molten P₂S₅ covers the S-C composite to form a strong interface. In other words, in Example, probably as a result of the formation of a strong interface by the covering of the S-C composite with the molten P₂S₅, the ratio of P₂S₅ became a certain value (e.g., 25%) or less, and the total value of the ratios of P₂S₆⁴⁻ and PS₃⁻ became a certain value (e.g., 20%) or more.

### (3) Specific Surface Area Parameter

The BET specific surface areas of the positive electrode mixtures and the solid electrolytes were measured with a specific surface area/pore distribution measuring apparatus (Autosorb-3) manufactured by Quantacrome Instruments. A specific surface area parameter was calculated by the following equation: 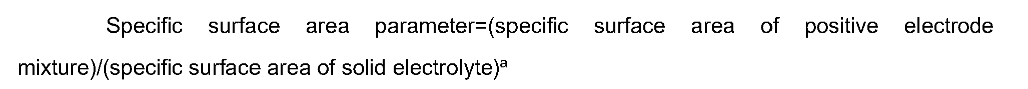 Specific surface area parameter=(specific surface area of positive electrode mixture)/(specific surface area of solid electrolyte)a wherein "a" represented the mass ratio (mass of solid electrolyte/mass of entirety of positive electrode mixture) of the solid electrolyte to the entirety of the positive electrode mixture.

The specific surface area parameter can correct an influence of the specific surface area of the solid electrolyte to enable the evaluation of a difference due to the presence or absence of the melting treatment of the ion conductor. The results are shown in Table 3.

**Table 3**

| | State of P₂S₅ | Blending ratio (mass) | | | | Specific surface area parameter | Crystal peak of XRD measurement |
|---|---|---|---|---|---|---|---|
| | | Sulfur | Activated carbon | P₂S₅ | Solid electrolyte | | |
| Example 1 | Molten | 35 | 15 | 20 | 30 (A) | 1. 75 | Absent |
| Example 2 | Molten | 35 | 15 | 10 | 40 (A) | 3. 50 | Absent |
| Example 3 | Molten | 35 | 15 | 20 | 30 (B) | 3. 84 | Absent |
| Example 4 | Molten | 35 | 15 | 20 | 30 (C) | 2. 25 | Absent |
| Comparative Example 1 | Unmixed | 35 | 15 | 0 | 50 (A) | - | - |
| Comparative Example 2 | Solid | 35 | 15 | 20 | 30 (A) | 5.49 | Present |
| Comparative Example 3 | Solid | 35 | 15 | 10 | 40 (A) | 5.24 | Present |

In each of Examples and Comparative Examples, the positive electrode mixture precursor and the solid electrolyte were mixed with a weak force (tumbling mill) so as to maintain the crystal of the solid electrolyte and suppress its amorphization. The specific surface area parameter can correct the influence of the specific surface area of the solid electrolyte to enable the evaluation of the difference due to the presence or absence of melting treatment. Comparison between the specific surface area parameters of Examples and Comparative Examples shows that the values of Comparative Examples are higher than those of Examples. The foregoing may suggest that the S-C composite is covered with the molten P₂S₅ similarly to the precursor.

### (4) Crystallinity Evaluation by X-ray Diffraction Measurement (XRD)

Each of the positive electrode mixture precursor powders was loaded into a groove having a diameter of 20 mm and a depth of 0.2 mm, and was leveled with glass to provide a sample. The sample was sealed with a Kapton film for XRD, and was subjected to XRD measurement without exposure to air.

The XRD measurement was performed by using a powder X-ray diffraction measuring apparatus D2 PHASER of Bruker Corporation under the following measurement conditions.

| | |
|---|---|
| Tube voltage: | 30 kV |
| Tube current: | 10 mA |
| X-ray wavelength: | Cu-Kα ray (1.5418 Å) |
| Optical system: | Concentrating method |
| Slit configuration: | Use of Soller slit: 4° (both incident side and receiving side), divergence slit: 1 mm, Kβ filter (Ni plate: 0.5%), and an air scatter screen having an aperture of 3 mm |
| Detector: | Semiconductor detector |
| Measurement range: | Bragg angles 2θ of from 10 deg to 60 deg |
| Step width, scanning speed: | 0.05 deg, 0.05 deg/sec |

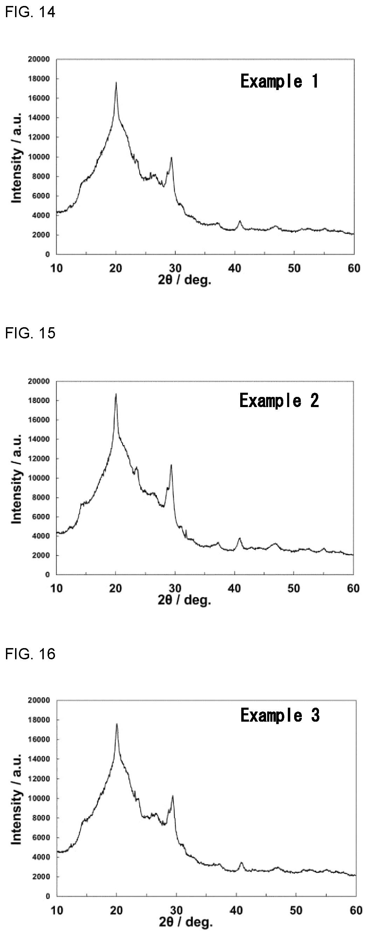

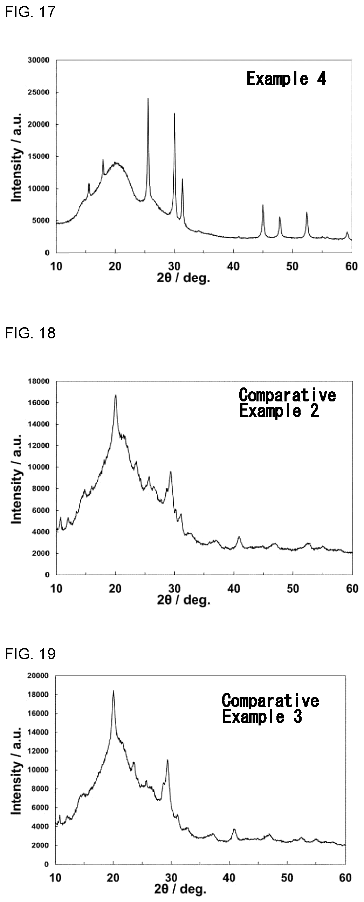

The presence or absence of the crystallinity of the sample was recognized from the presence or absence of a crystal peak in the resultant spectrum. P₂S₅ has peaks at positions, such as "Bragg angles 2θ of 10.81°, 12.12°, 14.90°, 16.07°, 21.68°, 25.67°, and 30.33°", and hence it was recognized whether or not crystal peaks were held at the above-mentioned positions in a state of the positive electrode mixture. The results are shown in Table 3. The X-ray diffraction charts of Examples 1 to 4, and Comparative Examples 2 and 3 are shown in FIG. 14 to FIG. 19.

It can be seen from Table 3 that no diffraction peak derived from the crystal of P₂S₅ is observed in each of Examples. It is expected that the crystallinity of P₂S₅ disappears by the melting thereof, and P₂S₅ exists around the S-C composite while remaining amorphous, to thereby form a strong interface.

### [All-solid-state Lithium Ion Battery]

All-solid-state lithium ion batteries were produced as described below by using the positive electrode mixtures produced in Examples and Comparative Examples, and were evaluated for their battery characteristics (charge-discharge characteristics).

### Production of Negative Electrode Mixture

A negative electrode mixture (also referred to as "lithium titanate (LTO) negative electrode mixture") was obtained by mixing lithium titanate ("LT-112" manufactured by Ishihara Sangyo Kaisha, Ltd.), a conductive additive ("Li-100" manufactured by Denka Company Limited, powdery acetylene black), and the solid electrolyte C in a mortar at a mass ratio of 60:5:35 for 5 minutes.

### Production of Lithium Ion Battery

100 mg of the solid electrolyte A was loaded into a MACOR cylinder having a diameter of 10 mm and subjected to pressure molding to form a solid electrolyte layer (layer of the solid electrolyte A).

Next, each of the positive electrode mixture powders was loaded onto one pressing surface of the solid electrolyte layer so that its amount became 10 mg, followed by pressure molding again.

Next, the LTO negative electrode mixture was loaded onto the other pressing surface (pressing surface opposite to the positive electrode) of the solid electrolyte layer so that its amount became 166 mg, followed by pressing. Li foil having a diameter of 9 mm and a thickness of 0.1 mm was loaded thereon, and the resultant was pressed again to produce a lithium ion battery.

### Charge-discharge Test

A constant-current charge-discharge test was performed on the lithium ion battery using the positive electrode mixture of each of Examples and Comparative Examples. The voltage range of the constant-current charge-discharge test was set to from -0.4 V to 1.3 V, and the test was performed while current values were set as shown in Table 6 at a C rate determined on the basis of a theoretical capacity of 1,672 mAh/g for sulfur. Regarding charging, CC-CV charging was performed, in which constant-voltage charging with 0.02 C as a termination condition was performed after constant-current charging, and regarding discharging, constant-current discharging (CC discharging) was performed. The results are shown in Table 7.

**Table 6**

| Number of cycles | Discharging (CC) | Charging (CC-CV) |
|---|---|---|
| 1 | 0. 05C | 0. 05C |
| 2 | 0.05C | 0. 05C |
| 3 | 0. 05C | 0.1C |
| 4 | 0.1C | 0.1C |
| 5 | 0. 2C | 0. 1C |
| 6 | 0. 33C | 0.1C |
| 7 | 0. 5C | 0.1C |
| 8 | 1C | 0.1C |
| 9 | 2C | 0.1C |

**Table 7**

| | Discharge capacity (mAh/g) | | | | | | |
|---|---|---|---|---|---|---|---|
| | @0. 05C | @0. 1C | @0. 2C | @0. 33C | @0. 5C | @1C | @2C |
| Example 1 | 1328 | 1271 | 1108 | 845 | 550 | 208 | 52 |
| Example 2 | 864 | 700 | 531 | 359 | 224 | 88 | 24 |
| Example 3 | 1434 | 1314 | 1198 | 979 | 675 | 245 | 49 |
| Example 4 | 1492 | 1420 | 1324 | 1128 | 850 | 351 | 70 |
| Example 5 | 1691 | 1588 | 1455 | 1180 | 862 | 405 | 120 |
| Example 6 | 1581 | 1513 | 1441 | 1318 | 1066 | 551 | 189 |
| Example 7 | 1520 | 1372 | 1260 | 1115 | 947 | 498 | 158 |
| Comparative Example 1 | 185 | 147 | 102 | 59 | 33 | 11 | 2 |
| Comparative Example 2 | 670 | 680 | 472 | 287 | 173 | 58 | 13 |
| Comparative Example 3 | 643 | 547 | 388 | 248 | 190 | 91 | 29 |

It was able to be recognized that the discharge capacities at both of a low rate and a high rate were high in each of Examples as compared to those of Comparative Examples. From the foregoing, improving effects on the charge-discharge characteristics in Examples in which the positive electrode mixture precursors were produced through the melting of P₂S₅ (ion conductor) were recognized. It is conceivable that in each of Examples, excellent charge-discharge characteristics were obtained by using the positive electrode mixture precursor having a strong interface and a satisfactory ion conduction path.

### Industrial Applicability

The positive electrode mixture of the present invention is suitable as a constituent material for a lithium ion battery. In addition, the lithium ion battery including the positive electrode mixture of the present invention is suitably used as, for example, a battery to be used in information-related equipment and communication equipment, such as a personal computer, a video camera, and a cellular phone, and a vehicle such as an electric vehicle.

Some embodiments and/or Examples of the present invention have been described in detail in the foregoing, but a person skilled in the art could easily make various modifications to these illustrative embodiments and/or Examples without substantially departing from the novel teachings and effects of the present invention. Accordingly, those various modifications are encompassed in the scope of the present invention.

The literatures described herein and the contents of the application on the basis of which the present application claims Paris convention priority are incorporated herein by reference in their entirety.

The phrase "from "x" to "y"" as used herein represents the numerical range of ""x" or more and "y" or less". Upper limits and lower limits described for numerical ranges may be freely combined.

In addition, among the individual embodiments of the aspects according to the present invention, two or more embodiments that do not contradict each other may be combined, and an embodiment in which two or more embodiments are combined is also an embodiment of the aspects according to the present invention.

## Claims

1. A positive electrode mixture comprising a sulfur-based active material; a carbon material having pores; at least one of an ion conductor containing a phosphorus element and a modified product of the ion conductor; and a solid electrolyte,
wherein in a P2p spectrum in surface elemental analysis thereof by X-ray photoelectron spectroscopy, at least one of the following formulas (1) and (2) is satisfied: ${I}_{A} / {I}_{B} > 0.50$ (1) ${I}_{C} / {I}_{B} > 1.20$ (2) wherein I_{A} represents a signal intensity at a position A where a binding energy is around 135.4 eV, I_{B} represents a signal intensity at a position B where the binding energy is around 134.25 eV, and I_{C} represents a signal intensity at a position C where the binding energy is around 133.0 eV.

2. The positive electrode mixture according to claim 1, wherein the ratio I_{C}/I_{B} is larger than 1.3.

3. The positive electrode mixture according to claim 1 or 2, wherein a rate of change in elemental ratio C/P of a carbon element to a phosphorus element by the surface elemental analysis by the X-ray photoelectron spectroscopy before and after Ar sputtering treatment is 0.550 or more.

4. The positive electrode mixture according to claim 3, wherein the rate of change in elemental ratio C/P is 0.600 or more.

5. The positive electrode mixture according to any one of claims 1 to 4, wherein in solid-state ³¹P-NMR measurement thereof, a total of areas of a peak of P₂S₆⁴⁻ and a peak of PS₃⁻ is 20% or more of an entirety.

6. The positive electrode mixture according to any one of claims 1 to 5, wherein in solid-state ³¹P-NMR measurement thereof, an area of a peak of P₂S₅ is 25% or less of an entirety.

7. The positive electrode mixture according to any one of claims 1 to 6, wherein the ion conductor has a melting point of from 130°C to 450°C.

8. The positive electrode mixture according to any one of claims 1 to 7, wherein the ion conductor comprises a lithium ion conductive material containing a phosphorus element, and one or more kinds of elements selected from lithium, boron, sulfur, and oxygen, or a precursor thereof.

9. The positive electrode mixture according to any one of claims 1 to 8, wherein the ion conductor comprises phosphorus sulfide.

10. The positive electrode mixture according to any one of claims 1 to 9, wherein the ion conductor comprises phosphorus pentasulfide.

11. The positive electrode mixture according to any one of claims 1 to 10, wherein the sulfur-based active material comprises elemental sulfur.

12. The positive electrode mixture according to any one of claims 1 to 11, wherein a mass ratio of a total of the sulfur-based active material, and the ion conductor containing a phosphorus element and the modified product of the ion conductor is smaller than 5.00 to the carbon material.

13. A method of producing a positive electrode mixture comprising: mixing at least one of a composite or a mixture of a sulfur-based active material and a carbon material having pores with an ion conductor in a molten state to prepare a positive electrode mixture precursor; and
mixing and pulverizing the positive electrode mixture precursor and a crystalline solid electrolyte under a condition where crystallinity of the solid electrolyte is free from disappearing, to thereby produce a positive electrode mixture.

14. The method of producing it according to claim 13, wherein the composite of the sulfur-based active material and the carbon material having pores is mixed with the ion conductor in a molten state.

15. The method of producing it according to claim 13 or 14, wherein the ion conductor has a melting point of from 130°C to 450°C.

16. The method of producing it according to any one of claims 13 to 15, wherein the ion conductor comprises a lithium ion conductive material containing a phosphorus element, and one or more kinds of elements selected from lithium, boron, sulfur, and oxygen, or a precursor thereof.

17. The method of producing it according to any one of claims 13 to 16, wherein the ion conductor is phosphorus sulfide.

18. The method of producing it according to any one of claims 13 to 17, wherein the ion conductor comprises phosphorus pentasulfide.

19. The method of producing it according to any one of claims 13 to 18, wherein the sulfur-based active material comprises elemental sulfur.

20. The method of producing it according to any one of claims 13 to 19, wherein a mass ratio among the sulfur-based active material, the carbon material, and the ion conductor satisfies the following relationship:
(sulfur-based active material+carbon material):ion conductor = 50:1 to 80.

21. The method of producing it according to any one of claims 13 to 20, wherein a mass ratio of a total of the sulfur-based active material and the ion conductor is smaller than 5.00 to the carbon material.

22. A positive electrode comprising the positive electrode mixture according to any one of claims 1 to 12.

23. A lithium ion battery comprising the positive electrode mixture according to any one of claims 1 to 12, or the positive electrode according to claim 22.
